# EUROPÄISCHE PATENTSCHRIFT

(11) **EP 0 936 317 B1**
(45) Veröffentlichungstag und Bekanntmachung des Hinweises auf die Patenterteilung: **10.09.2003**
(21) Anmeldenummer: 99100163.7
(22) Anmeldetag: 07.01.1999
(51) Int. Cl.: E03C 1/05, F16K 31/40, F16K 1/12

(54) **Magnetventil, insbesondere für sanitäre Armaturen**
Solenoid valve, in particular for sanitary appliances
Electrovanne, en particulier pour armatures sanitaires

(30) Priorität: 12.02.1998 DE 29802369 U
(43) Veröffentlichungstag der Anmeldung: 18.08.1999
(73) Patentinhaber: A. und K. Müller GmbH & Co. KG, 40595 Düsseldorf (DE)
(72) Erfinder: Denkena, Karl-Heinz Dipl.-Ing., 40593 Düsseldorf (DE); Tamegger, Robert Dipl.-Ing., 40593 Düsseldorf (DE)
(74) Vertreter: Feder, Wolf-Dietrich, Dr. Dipl.-Phys.

(56) Entgegenhaltungen:
- DE-A- 4 444 910
- DE-U- 29 614 645
- DE-U- 29 709 074
- GB-A- 2 206 397

## Beschreibung

Die Erfindung betrifft ein Magnetventil, insbesondere für sanitäre Armaturen.

In DE 29 614 645 U1 ist ein Magnetventil beschrieben mit einem Ventilgehäuse, das einen Ventileingang und einen Ventilausgang aufweist, die in der VentilSchließstellung durch einen auf einem Ventilsitz aufsitzenden Ventilkörper abgedichtet voneinander getrennt sind, wobei das Ventilgehäuse im wesentlichen topfförmig ausgebildet ist und im Bereich seines unverschlossenen Endes einen Gewindeabschnitt aufweist, der konzentrisch und koaxial zu den Ventilein- und Ventilausgängen liegt, die jeweils rotationssymmetrisch ausgebildet und konzentrisch zueinander dem unverschlossenen Ventilgehäuseende zugewandt sind, derart, dass die Ein- und Ausströmrichtungen entgegengesetzt zueinander ausgerichtet sind. Magnetventile in dieser geschlossenen und dichten Bauform werden auch als Kartuschen-Magnetventile bezeichnet.

Bei diesem bekannten Magnetventil liegen der Ventileingang und der Ventilausgang an der gleichen Seite des Ventilgehäuses koaxial zueinander, und Einströmrichtung und Ausströmrichtung verlaufen in entgegengesetzter Richtung.

Eine solche konstruktive Ausbildung eines Magnetventils eignet sich besonders gut zum Einsatz in Spülarmaturen in Eckventilausführung.

Für den Einsatz in Waschtischarmaturen ist aber eine derartige Bauweise eher ungünstig, weil dann innerhalb der Waschtischarmatur die nach unten gerichtete Ausströmrichtung umgekehrt werden muß und deshalb das Ventil mit einem nach oben führenden Rohr umgangen werden muß, um das Wasser dem erhöht angeordneten Auslauf der Armatur zuzuführen.

Diese Konstruktion ist relativ aufwendig und führt zu einer deutlichen Vergrößerung des Armaturenkörpers.

In GB-A-2 206 397 ist ein fotoelektrisch angesteuerter Wasserhahn beschrieben, bei dem in das Gehäuse der Armatur ein Magnetventil eingebaut ist. Die Armatur ist an zwei Zuleitungen angeschlossen, und der Strömungsweg verläuft jeweils für die beiden Zuleitungen getrennt durch ein gabelförmig ausgebildetes Verbindungsteil zu beiden Seiten des Magnetventils und um Ventilsitz und Ventilteller herum zu auf der anderen Seite des Ventilsitzes liegenden Eingangsdurchbrüchen. Die an der gleichen Seite des Ventilsitzes liegenden Enden von Zu- und Abführungskanälen besitzen entgegengesetzt zueinander ausgerichtete Strömungsrichtungen, während die Ein- und Ausströmrichtungen am Ein- bzw. Ausgang der Armatur in der gleichen Richtung ausgerichtet sind. Im Bereich des Eingangs der Armatur ist ein Gewindestutzen angeordnet, auf den Muttern aufgeschraubt sind, mit deren Hilfe die Armatur in einem Waschbecken oder dergleichen festgeschraubt werden kann.

Der Erfindung liegt die Aufgabe zugrunde, ein Magnetventil so auszubilden, dass Ventileingang und Ventilausgang an einander gegenüberliegenden Seiten des Ventilgehäuses liegen, ohne dass sich der Durchmesser des Ventilgehäuses wesentlich vergrößert, so dass durch diese Ausbildung erreicht wird, dass auch eine Vergrößerung des Armaturenkörpers nicht notwendig ist und dass sich bei Wartung oder Reparatur leicht ausbauen läßt.

Die Lösung dieser Aufgabe geschieht erfindungsgemäß mit den Merkmalen aus dem Patentanspruch 1. Vorteilhafte Weiterbildungen der Erfindung sind in den abhängigen Ansprüchen beschrieben. Der Grundgedanke der Erfindung besteht darin, die notwendige Umkehrung der Einström- oder Ausströmrichtung im Ventilgehäuse selbst durchzuführen, was aufgrund der kompakten Aufbaumöglichkeit der Ventilkonstruktion zu einer erheblichen Platzersparnis führt. Es ergibt sich ein Kartuschenventil in Durchgangsform, und der nach wie vor rotationssymmetrische Aufbau der Kartusche mit dem Gewindeabschnitt an einem Ende erlaubt einen kompakten und platzsparenden Einbau, insbesondere in sanitären Waschtischarmaturen. Ebenso läßt sich das erfindungsgemäße Magnetventil bei Wartung oder Reparatur leicht ausbauen.

Im folgenden wird anhand der beigefügten Zeichnungen ein Ausführungsbeispiel für das erfindungsgemäße Magnetventil und für seine Anordnung innerhalb einer sanitären Armatur näher erläutert.

In den Zeichnungen zeigen:
Fig. 1 das Magnetventil in einem Längsschnitt durch die Gehäuseachse;
Fig. 2 eine Sanitärarmatur mit einem eingesetzten Ventil nach Fig. 1.

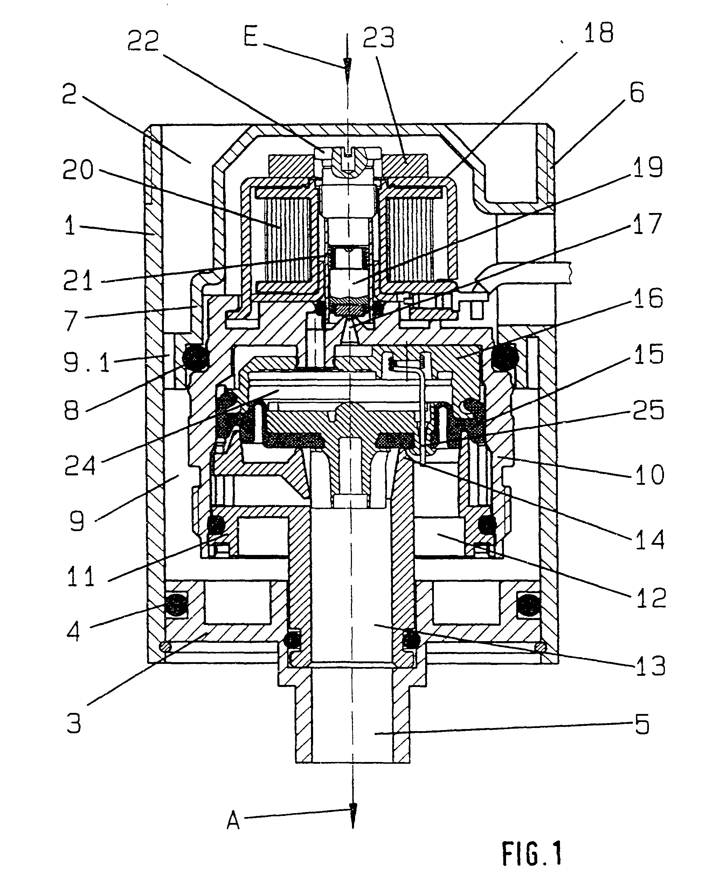

Das in Fig. 1 dargestellte Magnetventil besitzt ein rohrförmiges Ventilgehäuse 1 mit einem Ventileingang 2 am in Fig. 1 oberen Ende und einem Ventilausgang 5 am in Fig. 1 unteren Ende. Im Bereich des Ventileingangs 2 ist das Ventilgehäuse 1 mit einem Befestigungsgewinde 6 versehen, um das Ventilgehäuse in eine entsprechende Aufnahme einzuschrauben.

In das Gehäuse 1 ist im Bereich des Ventilausgangs 5 ein als Gehäusedeckel ausgebildeter Umlenkboden 3 eingesetzt, der mit einem O-Ring 4 an der Innenwand des Gehäuses 1 abgedichtet ist. Am Umlenkboden 3 ist nach außen ragend der Ventilausgang 5 angeformt.

Im Bereich des Ventileingangs 2 ist in das rohrförmige Ventilgehäuse 1 eine Aufnahmekontur 7 eingeformt, welche die eigentliche Ventilkonstruktion, die weiter unten näher erläutert wird, an der in Fig. 1 oberen Seite umschließt und abdeckt. Diese Ventilkonstruktion besitzt ein topfartiges Aufnahmeteil 10, in das ein Einsatzteil 11 eingesetzt ist und an dem ein Ventilsitz 14 angeordnet ist, auf den sich ein Ventilteller in Form einer Membran 15 auflegen kann, die auf eine Zwischenplatte 16 aufgeknöpft ist. An der in Fig. 1 oberen geschlossenen Seite des Aufnahmeteils 10 ist die Düse 17 eines Vorsteuerventils angeordnet. Auf das Aufnahmeteil 10 ist der elektromagnetische Steuerteil des Ventils mit einem Elektromagneten 18 und einem in diesem gleitenden, der Düse 17 gegenüberliegenden Plunger 19 aufgesetzt. Mittels des an seiner Unterseite eine Dichtung tragenden Plungers 19 kann die Düse 17 geöffnet oder geschlossen werden. Die Darstellung in Fig. 1 zeigt das Ventil im geschlos-senen Zustand mit einem bistabilen Elektromagneten.

Der Raum zwischen dem Plunger 19 und der Düse 17 ist mit einer, hinter der Membran 15 liegenden Gegendruckkammer 24 verbunden, die ihrerseits über einen seitlich in der Membran 15 angeordneten Kanal 25 mit einem Eingangsdurchbruch 12 des Aufnahmeteils 10 verbunden ist. Andererseits ist der Raum zwischen der Düse 17 und dem Plunger 19 bei geöffneter Düse 17 über Durchbrüche mit einem Auslaßstutzen 13 des Aufnahmeteils 10 verbunden.

Das Aufnahmeteil 10 ist an der in Figur oberen Seite über einen O-Ring 8 dichtend an die Aufnahmekontur 7 angesetzt.

Der koaxial zur Mittelachse liegende Ventilausgang 5 schließt unmittelbar an den Auslaßstutzen 13 des Aufnahmeteils 10 an. Der Ventileingang 2 ist über einen Strömungsweg 9, der entlang der Innenwand des Ventilgehäuses 1 in einem Ringspalt über Durchbrüche 9.1 zwischen der Innenwand des Ventilgehäuses 1 und der Aufnahmekontur 7 verläuft, zu den Eingangsdurchbrüchen 12 des Aufnahmeteils 10 geführt, der in dem in Fig. 1 unteren Bereich des Ventilgehäuses 1 durch den Umlenkboden 3 in seiner Strömungsrichtung um 180° umgelenkt wird.

Die Funktionsweise des oben beschriebenen Magnetventils wird im folgenden dargestellt.

Wenn die Erregerspule 20 des Elektromagneten 18 einen Gleichstromimpuls erhält, wird der Plunger 19 entgegen der Kraft der Feder 21 an den Weicheisenkern der Hubeinstellschraube 22 gezogen. Die Magnetkraft des Permanentmagneten 23 ist dabei größer als die Kraft der Feder 21, so daß der Plunger in dieser Stellung verbleibt, wenn der Erregerstrom abgeschaltet wird.

Durch die Hubbewegung des Plungers 19 wird die Düse 17 geöffnet. Im geschlossenen Zustand der Düse 17 und Druckausgleich in der Gegendruckkammer 24, die über den Kanal 25, den Eingangsdurchbruch 12 und den Ringspalt 9 mit dem Ventileingang 2 verbunden ist, ergibt sich aufgrund unterschiedlicher Wirkflächen oberhalb und unterhalb der Membrane 15 eine Kraft, die die Membrane 15 auf dem Ventilsitz 14 festhält. Beim Öffnen der Düse 17 wird über Durchbrüche die Gegendruckkammer 24 mit dem Ventilausgang 5 verbunden, was zu einem Druckabfall in der Gegendruckkammer 24 führt. Nunmehr hebt der auf die Unterseite der Membran 15 vom Ventileingang 2 über die Eingangsdurchbrüche 12 her wirkende Wasserdruck die Membran 15 vom Ventilsitz 14 ab, so daß Wasser durch den Ventileingang 2 zum Ventilausgang 5 fließt.

Zum Schließen des Ventils wird die Erregerspule 20 mit umgekehrter Polarität bestromt, wodurch das Magnetfeld des Permanentmagneten 23 soweit geschwächt wird, daß die Druckfeder den Plunger 19 von seiner Anschlagfläche löst, so daß die Düse 17 geschlossen wird. Nun füllt sich die Gegendruckkammer 24 über den seitlichen Kanal 25 wieder auf, wobei der daraus resultierende Druckaufbau in der Gegendruckkammer 24 zum Schließen des Ventilsitzes 14 durch Aufsetzen der Membran 15 führt.

Wie aus Fig. 1 ohne weiteres abzulesen, liegen Ventileingang 2 und Ventilausgang 5 koaxial zueinander und die Einströmrichtung E und die Ausströmrichtung A sind in der gleichen Richtung ausgerichtet.

Das in Fig. 1 dargestellte und oben beschriebene Magnetventil kann mittels des Gewindeabschnittes 6 in eine Ventilaufnahme eines Armaturengehäuses eingeschraubt werden.

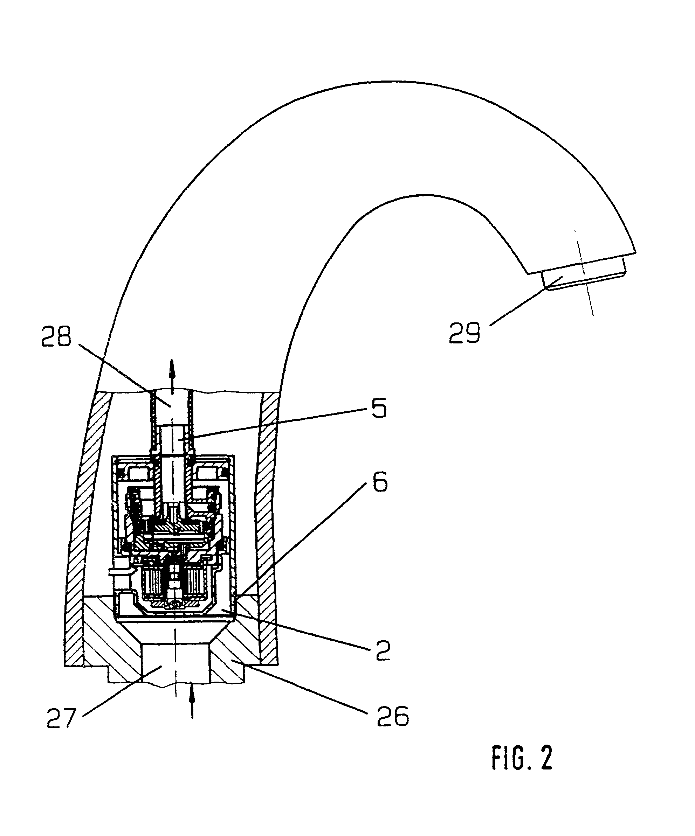

Eine derartige Einbaumöglichkeit ist in Fig. 2 dargestellt. Fig. 2 zeigt in teilweise geschnittener Darstellung eine sanitäre Waschtischarmatur, in die das in Fig. 1 dargestellte Magnetventil eingebaut ist. Das Magnetventil wird mit seinem Befestigungsgewinde 6 in eine entsprechend gestaltete Ventilaufnahme 26 eingeschraubt. Der Ventileingang 2 ist damit an den Einlaß 27 der Armatur angeschlossen. Am Ventilausgang 5 ist ein Verbindungsrohr 28 befestigt, das mit dem Armaturenauslauf 29 verbunden ist.

Wie aus Fig. 2 ersichtlich, sind keine äußeren Umleitungen oder Umlenkungen des durch die Armatur und das Magnetventil strömenden Wassers notwendig.

## Patentansprüche

1. Magnetventil, insbesondere für sanitäre Armaturen, mit einem im wesentlichen rohrförmigen Ventilgehäuse (1),das einen Ventileingang (2) und einen Ventilausgang (5) aufweist, die in der Ventilschließstellung durch einen auf einem Ventilsitz (14)aufsitzenden Ventilteller (15) abgedichtet voneinander getrennt sind und bei dem innerhalb des Ventilgehäuses (1) an der gleichen Seite des Ventilsitzes (14) liegende, im wesentlichen koaxial zueinander verlaufende Enden von Zu- und Abführungskanälen mit entgegengesetzt zueinander ausgerichteten Strömungsrichtungen angeordnet sind und Ventileingang (2) und Ventilausgang (5) an den beiden voneinander abgewandten Enden des Ventilgehäuses (1) angeordnet sind und vom Ventileingang (2) ein Strömungsweg entlang der Innenwand des Ventilgehäuses (1) geführt ist und von einer innerhalb des Ventilgehäuses (1) angeordneten Aufnahmekontur (7), die die eigentliche Ventilkonstruktion mit dem Ventilsitz (14), dem Ventilteller (15) usw. umschließt und abdeck in einem Ringspalt über Durchbrüche (9.1) zwischen der Innenwand des Ventilgehäuses (1) und der Aufnahmekontur (7) verläuft, wobei der Strömungsweg weiter durch einen den Strömungsweg um 180° umlenkenden Umlenkboden (3), der im Bereich des Ventilausgangs (5) im Ventilgehäuse (1) eingesetzt ist, zu auf der anderen Seite des Ventilsitzes (14) liegenden Eingangsdurchbrüchen (12) und um den Ventilsitz (14) herum und durch den Ventilteller (15) um 180° umgelenkt geführt ist, so dass und die Einund Ausströmrichtungen am Ventileingang (2) und am Ventilausgang (5) in der gleichen Richtung ausgerichtet sind, wobei das Ventil als Kartuschenventil ausgebildet ist und das Ventilgehäuse an dem den Ventileingang (2) aufweisenden Ende einen Gewindeabschnitt (6) zum Einschrauben in eine Ventilaufnahme (26) aufweist, der koaxial zum Ventilausgang (5) und zum Ventileingang (2) liegt, die jeweils rotationssymmetrisch ausgebildet sind und wobei der Umlenkboden (3) mit einem O-Ring (4) an der Innenwand des Ventilgehäuses (1) abgedichtet ist.

2. Magnetventil nach Anspruch 1, **dadurch gekennzeichnet, daß** der Ventilausgang (5) an den Umlenkboden (3) angeformt ist.

3. Magnetventil nach Anspruch 1 oder 2, **dadurch gekennzeichnet, daß** die Aufnahmekontur (7) im wesentlichen kappenförmig ausgebildet ist und zwischen ihrem inneren Ende und der Innenwand des Ventilgehäuses (1) Durchbrüche (9.1) für den Strömungsweg (9) vorgesehen sind.

4. Magnetventil nach einem der Ansprüche 1 bis 3, **dadurch gekennzeichnet, daß** die innerhalb des Ventilgehäuses (1) angeordnete Ventilkonstruktion ein topfartiges Aufnahmeteil (10) aufweist, in das ein den Ventilsitz (14) und den Ventilteller (15) tragendes Einsatzteil (11) eingesetzt ist und in dem an seiner geschlossenen Seite die Düse (17) eines Vorsteuerventils angeordnet ist und auf dem ein Steuerteil mit einem Elektromagneten (18) und einem der Düse (17) gegenüberliegenden Plunger (19) angeordnet ist, der von der Aufnahmekontur (7) umschlossen und abgedeckt ist.

## Claims

1. Solenoid valve, in particular for sanitary fittings, with a substantially tubular valve housing (1) comprising a valve inlet (2) and a valve outlet (5) which are separated from one another in a sealed manner when the valve is in the closed position by a valve disc (15) which is seated on a valve seat (14), and in which ends, lying on the same side of the valve seat (14) and extending substantially coaxially with one another, of feed and discharge ducts with opposite flow directions are disposed inside the valve housing (1), and the valve inlet (2) and valve outlet (5) are disposed at the two ends of the valve housing (1) which are remote from one another, and a flow path leads from the valve inlet (2) along the inner wall of the valve housing (1) and extends from a receptacle contour (7), which is disposed inside the valve housing (1) and encompasses and covers the actual valve construction with the valve seat (14), the valve disc (15), etc., in an annular gap via openings (9.1) between the inner wall of the valve housing (1) and the receptacle contour (7), wherein the flow path leads further through a deflection bottom (3), which deflects the flow path through 180° and is inserted in the region of the valve outlet (5) in the valve housing (1), to inlet openings (12), which lie on the other side of the valve seat (14), and round the valve seat (14) and through the valve disc (15), being deflected through 180°, so that the inflow and outflow directions at the valve inlet (2) and at the valve outlet (5) are the same, wherein the valve is formed as a cartridge valve and the valve housing comprises at the end which comprises the valve inlet (2) a threaded portion (6) for screwing into a valve receptacle (26) which is coaxial with the valve outlet (5) and the valve inlet (2), these in each case being formed in rotationally symmetrical fashion, and wherein the deflection bottom (3) is sealed off by an O-ring (4) at the inner wall of the valve housing (1).

2. Solenoid valve according to Claim 1, **characterised in that** the valve outlet (5) is moulded onto the deflection bottom (3).

3. Solenoid valve according to Claim 1 or 2, **characterised in that** the receptacle contour (7) is substantially cap-shaped, and openings (9.1) for the flow path (9) are provided between its inner end and the inner wall of the valve housing (1).

4. Solenoid valve according to any one of Claims 1 to 3, **characterised in that** the valve construction disposed inside the valve housing (1) comprises a pot-like receptacle part (10), in which an insert (11) bearing the valve seat (14) and the valve disc (15) is inserted and in which the nozzle (17) of a pilot valve (17) is disposed on its closed side and on which a control part with an electromagnet (18) and a plunger (19), lying opposite the nozzle (17), is disposed, this being encompassed and covered by the receptacle contour (7).

## Revendications

1. Vanne électromagnétique, en particulier pour des robinetteries sanitaires, comportant un carter de vanne (1) sensiblement tubulaire qui comprend une entrée de vanne (2) et une sortie de vanne (5) qui, dans la position fermée de la vanne, sont séparées l'une de l'autre de manière étanche par un opercule de vanne (15) reposant sur un siège de vanne (14), et dans laquelle sont agencées, à l'intérieur du carter de vanne (1), des extrémités de canaux d'alimentation et d'évacuation situées sur le même côté du siège de vanne (14) et s'étendant sensiblement coaxialement l'une à l'autre, dont les directions d'écoulement sont orientées en sens opposés l'une à l'autre, et l'entrée de vanne (2) et la sortie de vanne (5) sont agencées aux deux extrémités détournées l'une de l'autre du carter de vanne (1), et à partir de l'entrée de vanne (2), un trajet d'écoulement est mené le long de la paroi intérieure du carter de vanne (1) et à partir d'un contour de réception (7), agencé à l'intérieur du carter de vanne (1) et emprisonnant et recouvrant la construction de vanne proprement dite avec le siège de vanne (14), avec l'opercule de vanne (15), etc., ledit trajet s'étend dans une fente annulaire via des traversées (9.1) entre la paroi intérieure du carter de vanne (1) et le contour de réception (7), le trajet d'écoulement est mené en outre par un fond de renvoi (3) renvoyant le trajet d'écoulement de 180° et mis en place dans la zone de la sortie de vanne (5) dans le carter de vanne (1), vers des traversées d'entrée (12) situées sur l'autre côté du siège de vanne (14) et autour du siège de vanne (14) et avec renvoi de 180° par l'opercule de vanne (15), de sorte que les directions d'écoulement rentrant et sortant à l'entrée de vanne (2) et à la sortie de vanne (5) sont orientées dans la même direction, la vanne étant réalisée sous forme de vanne en cartouche et le carter de vanne comprenant, à l'extrémité présentant l'entrée de vanne (2), un tronçon fileté (6) pour le visser dans un logement de vanne (26), situé coaxialement à la sortie de vanne (5) et à l'entrée de vanne (2) qui sont réalisées chacune à symétrie de révolution, et le fond de renvoi (3) étant étanché par un joint torique (4) sur la paroi intérieure du carter de vanne (1).

2. Vanne électromagnétique selon la revendication 1, **caractérisée en ce que** la sortie de vanne (5) est conformée sur le fond de renvoi (3).

3. Vanne électromagnétique selon l'une ou l'autre des revendications 1 et 2, **caractérisée en ce que** le contour de réception (7) est réalisé sensiblement en forme de capuchon, et **en ce que** des traversées (9.1) pour le trajet d'écoulement (9) sont prévues entre son extrémité intérieure et la paroi intérieure du carter de vanne (1).

4. Vanne électromagnétique selon l'une des revendications 1 à 3, **caractérisée en ce que** la construction de vanne agencée à l'intérieur du carter de vanne (1) comprend une partie de réception (10) en forme de pot dans laquelle est mise en place une pièce formant insert (11) portant le siège de vanne (14) et l'opercule de vanne (15) et dans laquelle est agencée, sur son côté fermé, la buse (17) d'une vanne pilote et sur laquelle est agencée une pièce de commande avec un électroaimant (18) et avec un plongeur (19) opposé à la buse (17), qui est emprisonné et recouvert par le contour de réception (7).
